# EUROPEAN PATENT SPECIFICATION

(11) **EP 1 550 506 B1**
(45) Date of publication and mention of the grant of the patent: **09.03.2016**
(21) Application number: 02775302.9
(22) Date of filing: 08.10.2002
(51) Int. Cl.: B01J 20/20, B01J 20/10, B01J 20/22, B01J 20/32, C01B 13/02, A23L 3/3436, B01J 20/28

(54) **OXYGEN SCAVENGER COMPOSITION**
SAUERSTOFFFÄNGERZUSAMMENSETZUNG
COMPOSITION ABSORBANT L'OXYGENE

(43) Date of publication of application: 06.07.2005
(73) Proprietor: MITSUBISHI GAS CHEMICAL COMPANY, INC., Tokyo 100-0005 (JP)
(72) Inventor: SUGIMOTO, Ken, Tokyo 125-0051 (JP); IWAI, Tatsuo, Tokyo 125-0051 (JP); SEKI, Takahiro, Tokyo 125-0051 (JP)
(74) Representative: Gille Hrabal
(86) International application number: PCT/JP2002/010434
(87) International publication number: WO 2004/033088

(56) References cited:
- EP-A- 0 527 228
- FR-A- 2 022 713
- JP-A- 1 202 281
- JP-A- 3 086 238
- JP-A- 10 140 129
- JP-A- 10 287 871
- US-A- 4 166 807
- US-A- 4 226 636
- US-A- 4 226 636
- US-A- 5 180 518
- ANONYMOUS: "Florite" INTERNET ARTICLE, [Online] XP002466634 Retrieved from the Internet: URL:http://www.tokuyama.co.jp/eng/products /chem/si/florite.html> [retrieved on 2008-01-23]

## Description

### Technical Field

The present invention relates to an oxygen-absorbing composition, more particularly, to an organic oxygen absorbing composition containing an organic compound as a principal ingredient.

### Background Art

As one of the techniques for preserving foods and medicines, known is a preservation method using an oxygen-absorbing agent which has been used to prevent mold growth, oxidation and discoloration. Generally, the oxygen-absorbing agent is made into an oxygen-absorbing package by continuously packing an easily oxidizable composition into small bags made of a gas-permeable material. The oxygen-absorbing package is placed, together with products being preserved such as foods and medicines, into a gas-barrier package such as a bag and container with less oxygen permeability. As the oxygen-absorbing agent, known are those containing an easily oxidizable inorganic substance such as iron as the principal ingredient and those containing an easily oxidizable organic substance such as an ascorbic acid compound, a polyphenol compound and an unsaturated hydrocarbon compound as the principal ingredient.

An inorganic oxygen-absorbing agent containing the easily oxidizable inorganic substance such as iron is unintentionally detected by a metal detector for detecting metallic contaminants in products being preserved such as foods and medicines. To avoid this inconvenience, an organic oxygen-absorbing agent containing as the principal ingredient an organic substance undetectable to a metal detector has been used.

The organic oxygen-absorbing agent usually contains, in addition to the principal ingredient of an organic substance, an inorganic filler to control the oxygen-absorbing ability and oxygen-absorbing speed and to improve the powder properties such as packing easiness, as described in JP 5-269376A. In particular, a liquid organic oxygen-absorbing agent is carried on inorganic carriers. Some inorganic carriers originated from natural products contain iron components such as iron oxide as impurities. Therefore, such inorganic carriers applied to food packages are likely to be detected in safety inspection using a metal detector. To avoid such inconvenience, it has been proposed to remove the iron components by washing the natural inorganic carriers with acid.

In place of the natural inorganic carriers, high-purity inorganic carriers free from iron components which are chemically synthesized are usable. However, the synthesized inorganic carriers are usually fine powders with small particle sizes. This makes the flowability during the packaging operation low to cause a problem of dusting. In addition, a liquid organic oxygen-absorbing agent is limited in its supporting amount on carriers, this making the oxygen-absorbing ability per unit volume extremely low as compared with the iron-based oxygen-absorbing agent.

In a packaged oxygen-absorbing agent containing an easily oxidizable composition packaged into a small bag made of a gas-permeable packaging material, a large amount of the oxygen-absorbing composition must be used to achieve an intended oxygen·absorbing amount when the content of the easily oxidizable composition per volume of the oxygen-absorbing composition is low. As a result, an increased amount of the gas-permeable packaging material per one oxygen-absorbing package is required, to increase production costs.

Activated carbon has been known as the carrier for promoting the oxidation of the easily oxidizable principal ingredient of an easily oxidizable organic composition, particularly, the oxidation of ascorbic acid or its related compounds. However, the use of activated carbon as the carrier is likely to cause the dusting thereof. When the dust of activated carbon adheres to the surface of an oxygen-absorbing package, the dust also adheres to the product being preserved, to deteriorate its appearance.

Document EP 0527228 describes oxygen-absorbing compositions comprising silicon dioxide and/or calcium silicate and crystal cellulose as dispersion medium and dispersed therein a carbonic acid gas generating agent, a ferrous compound, a pH adjuster and water. The components are mixed together.

### Disclosure of Invention

An object of the present invention is to provide an oxygen-absorbing composition containing an organic compound as the principal ingredient, which is not detected by a metal detector, which can carry a large amount of the organic compound, and which is excellent in the oxygen-absorbing ability per unit volume. The oxygen-absorbing agent excellent in the oxygen-absorbing ability per unit volume can be small in the volume for its oxygen absorption, thereby reducing the amount of a packaging material to be used.

As a result of intensive study in view of solving the above problems, the inventors have found that a carrier containing a calcium silicate compound having corollaceous crystal structures and represented by the following formula:

CaO-mSiO₂-nH₂O

wherein m is a number from 1.6 to 6.5 and n is a positive number, can carry an easily oxidizable organic composition in an amount exceeding 210 parts by weight per 100 parts by weight thereof. The inventors have further found that a calcium silicate compound carrying such a large amount of the easily oxidizable organic composition serves as an oxygen-absorbing composition containing an organic compound as the principal ingredient, which is excellent in the total oxygen absorption per unit volume, the oxygen-absorbing speed, and handling ability. The present invention has been accomplished on the basis of these findings.

Particularly, the oxygen-absorbing composition of the present invention shows a large oxygen-absorbing ability per its unit volume because of carrying a large amount of the easily oxidizable organic composition. This reduces the size of an oxygen-absorbing package that is produced by packaging the oxygen-absorbing composition into an gas-permeable packaging material, and also reduces the amount of the gas-permeable packaging material to be used. Thus, the present invention is of great industrial value.

### Brief Description of Drawings

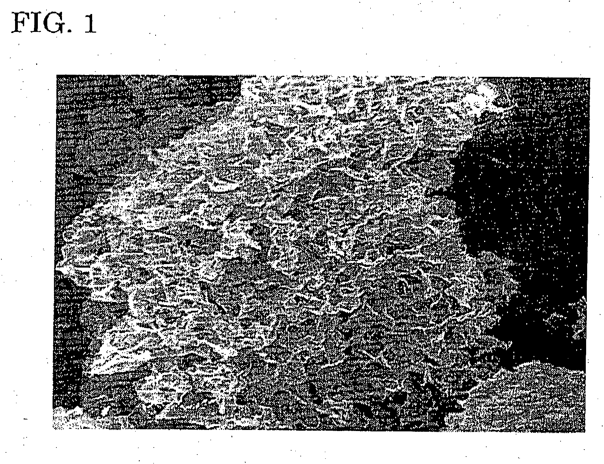

Fig. 1 is a scanning electron photomicrograph (about x 15,000) showing the crystal structures of the raw powder material used in Example 1.

### Best Mode for Carrying Out the Invention

About 25 kinds of calcium silicate compounds with crystalline and amorphous structures are known. Of the calcium silicate compounds represented by the following formula:

CaO-mSiO₂-nH₂O,

those having a SiO₂/CaO molar ratio of from 1.0 to 1.5 are in the crystal forms such as xonotlite, tobermorite, and gyrolite.

In the present invention, the calcium silicate compound for use as the carrier for supporting the easily oxidizable organic composition is represented by the following formula:

CaO•mSiO₂•nH₂O

wherein m is a number from 1.6 to 6.5 and n is a positive number, and has corollaceous crystal structures.

The SiO₂/CaO molar ratio, m, is from 1.6 to 6.5, preferably from 1.7 to 4.2, more preferably from 2.0 to 3.0, and most preferably from 2.0 to 2.5. The H₂O/CaO molar ratio, n, is a positive number, preferably 1.0 or more, and more preferably from 1.0 to 1.5.

The calcium silicate compound used in the present invention is constituted by curved plate crystals (petaloid crystals) containing gyrolite calcium silicate and amorphous silicon dioxide. The plate crystals are aggregated into the corollaceous crystal structures, to form a highly porous powder with an increased number of voids. The calcium silicate compound is chemically synthesized as a powder having a specifically large water absorption and excellent in compression moldability.

The corollaceous crystal structures referred to herein are crystal structures resembling rose flower, which are composed of irregular aggregates of petaloid, i.e., curved plate crystals each extending not along a fixed direction but along various directions (Fig. 1). The size and shape of the petaloid crystals constituting the corollaceous crystal structures vary depending on the kinds of starting raw materials, the mixing ratio of starting raw materials, the production conditions, etc. Generally, the petaloid crystals have circular or elliptical shapes having a lengthwise diameter from 0.1 to 30 µm and a thickness from about 0.005 to 0.1 µm. The diameter referred to herein means the maximum length of particles with circular, prismatic, columnar, or other shapes. As shown in Fig. 1, the crystal structures of the calcium silicate compound can be confirmed by a scanning electron photomicrograph of about 10,000 magnifications.

The corollaceous calcium silicate compound used in the present invention has a large number of micropores attributable to the gyrolite crystal structures. The excellent water retention of the calcium silicate compound is assumed as a result of such a large number of micropores.

The calcium silicate compound is produced as a water-insoluble powder by reacting a water-soluble silicate such as sodium silicate and potassium silicate with a water-soluble calcium compound such as calcium chloride, calcium nitrate and calcium hydroxide in 5 to 100 times, preferably 15 to 70 times by weight of an aqueous medium, and then, performing a hydrothermal reaction at 150 to 250°C for 1 to 50 h. The reaction is carried out such that an insoluble silicon dioxide is present simultaneously with the formation of the gyrolite calcium silicate, for example, by adjusting pH. The presence of the insoluble silicon dioxide contributes to the formation of the petaloid and corollaceous crystal structures (JP 54-93698A).

In the present invention, it is preferred to granulate the chemically synthesized calcium silicate compound and use the resultant granulates as the carrier after drying. By the granulation, the scattering of the powdery oxygen-absorbing composition can be prevented during the packing operation. The calcium silicate compound may be made into granulates by passing it through punching plates, rolling it in a container, etc. The average particle size of the granulate is preferably 100 µm or more, more preferably from 100 µm to 15 mm, and still more preferably from 300 µm to 10 mm. The most preferred particle size is 100 µm to 5 mm for nearly spherical particles, and 500 µm to 7 mm for particles with a long and narrow shape such as prism and column. Particles having an average particle size of less than 100 µm are insufficient in the flowability and not suitable for an automatic packaging of the oxygen-absorbing agent by a high-speed packaging machine.

A binder may be added in the granulation process. Examples of suitable binders include synthetic polymers such as poly(vinyl alcohol), poly(vinyl acetate), poly(acrylic acid), and polyurethane; soluble cellulose compounds such as methylcellulose, ethylcellulose and carboxymethylcellulose; and naturally-occurring polymers such as guar gum, xanthan gum, tragacanth gum, carageenan, and sodium alginate. The amount of the binder to be added, if used, is from 0.01 to 20 parts by weight, preferably from 0.05 to 10 parts by weight, and more preferably from 0.5 to 5 parts by weight based on 100 parts by weight the calcium silicate compound (exclusive of water).

An additive for promoting deoxgenation reaction and removing smelling components produced by the deoxgenation reaction may be further added in the granulation process. Examples of such additives include alkali metal hydroxides; alkaline earth metal hydroxides; transition metal salt catalysts such as iron salts, manganese salts, copper salts, and cobalt salts; carbon dioxide gas regulators such as carbonates and hydrogencarbonates; absorbers such as silica gel and zeolite; and aldehyde removers such as ethylene urea and sulfamic acid.

In addition, a deodorant and a powdery filler serving as a flowability improver may be added. The additive may be added so as to cover the surface of carrier or may be mixed with the carrier so as to exist as separate particles.

The chemically synthesized calcium silicate compound may be mixed with activated carbon and granulated into a carrier having an average particle size of 100 µm or more. With such a granulation operation, an oxygen-absorbing composition that is excellent in flowability, free from dusting, good in handling during the packing operation into packaging material, and high in packing density. The activated carbon to be granulated together with the calcium silicate compound may be activated carbons generally used such as coconut shell-base carbon, wood-base carbon and coal-base carbon. The shape of the activated carbon to be used in the present invention is not specifically limited, and a powdery activated carbon having an average particle size from 10 to 100 µm is preferably used in view of easiness of mixing with the calcium silicate compound.

The oxygen-absorbing speed increases with increasing mixing ratio of the activated carbon to the calcium silicate compound, namely, with increasing proportion of the activated carbon, and a relatively high oxygen-absorbing speed can be attained particularly even at low temperatures. The mixing ratio of the activated carbon to the calcium silicate compound may be determined according to the intended oxygen-absorbing speed and oxygen absorption. The mixing ratio is preferably from 10 to 150 parts by weight, more preferably from 30 to 100 parts by weight of the activated carbon per 100 parts by weight of the calcium silicate compound. When the mixing ratio of the activated carbon is too large, the total oxygen absorption per unit volume of oxygen-absorbing composition becomes too small because the potential impregnation amount of the easily oxidizable composition is reduced. When the mixing ratio of the activated carbon is too small, the effect for increasing the oxygen-absorbing speed is diminished.

In the present invention, the easily oxidizable organic composition is carried in an amount of 210 parts by weight or more per 100 parts by weight of the carrier. Although an excellent oxygen-absorbing agent having a large oxygen absorption can be obtained if the carried amount is less than the above range, a larger carried amount of the easily oxidizable organic composition is recommended. Preferably, the carried amount is 240 parts by weight or more per 100 parts by weight of the carrier. The upper limit of the carried amount is generally 450 parts by weight, preferably 400 parts by weight per 100 parts by weight of the carrier. In industrial processes, it is preferred to first determine the maximum carried amount of the easily oxidizable composition which allows to retain a good flowability, and then, carry the easily oxidizable composition on the carrier in an amount of 90% of the maximum carried amount.

The easily oxidizable composition may be carried on the carrier by impregnating a dried carrier with an easily oxidizable composition in liquid form.

The easily oxidizable organic composition to be carried on the carrier is a mixture containing an organic compound as the principal ingredient of the oxygen-absorbing agent, an additive for putting the principal organic compound in chemically easily oxidizable conditions, and an optional water. The easily oxidizable organic composition can be impregnated into the carrier in the form of liquid, preferably a homogeneous liquid such as an aqueous solution, a slurry and an oily solution.

Examples of the easily oxidizable organic compounds as the principal ingredient of the oxygen-absorbing agent include ascorbic acid and its salts; erythorbic acid and its salts; polyhydric alcohols such as ethylene glycol, propylene glycol and glycerol; monosaccharides such as glucose and xylose; sugar alcohols such as xylitol, mannitol and sorbitol: polyphenols such as catechol, resorcinol, hydroquinone, gallic acid, pyrogallol, and tocopherol; unsaturated fats and oils such as vegetable oils, fish oils and tall oil, and unsaturated fatty acids contained therein; and unsaturated polymers such as butadiene oligomers and isoprene oligomers. In view of the oxygen-absorbing capacity, easy availability and costs, preferred are ascorbic acid, its salts, gallic acid and butadiene oligomers, with ascorbic acid and its salts being more preferred.

Examples of the additive for putting the organic compound in chemically easily oxidizable conditions include alkali agents such as hydroxides, carbonates and hydrogen carbonates of alkali metals or alkaline earth metals; and transition metal salt catalysts such as iron salts, manganese salts, copper salts and cobalt salts. These compounds may be used alone or in combination of two or more.

The oxygen-absorbing ability is preferably increased by increasing the carried amount of the easily oxidizable organic compound on the carrier. Therefore, it is preferred that the ratio of the easily oxidizable organic compound to water is as high as possible within the range not causing the precipitation of the easily oxidizable organic compound, although depending on the solubility and the viscosity of solution. When ascorbic acid (or its slat) is used as the easily oxidizable organic compound, preferred is an easily oxidizable composition containing 100 parts by weight of ascorbic acid (or its slat), 60 to 200 parts by weight of water, 1 to 35 parts by weight of the alkali agent, and 5 to 30 parts by weight of the transition metal salt catalyst. When the polyhydric alcohol is used as the easily oxidizable organic compound, preferred is an easily oxidizable composition containing 100 parts by weight of the polyhydric alcohol, 15 to 115 parts by weight of water, and 3 to 6 parts by weight of the transition metal salt catalyst. The optimum amount of the additive depends on the kinds of the easily oxidizable organic compound and the additive. Although a larger addition amount of the additive is preferable in view of increasing the oxygen-absorbing ability, an excessive amount of the additive is not preferred in view of the storage stability, the loss of effect during handling under atmospheric pressure, and increased costs.

The oxygen-absorbing composition of the present invention is made into the oxygen-absorbing package by packaged with the gas-permeable packaging material. The gas-permeable packaging material may include paper, resin film, non-woven fabric, perforated resin film, and laminates of the preceding materials. The oxygen-absorbing package containing the oxygen-absorbing composition packaged in the gas-permeable packaging material is not detected by a metal detector even when made into a large-sized package containing a large amount of the oxygen-absorbing composition.

The present invention will be described in more detail by reference to the following examples. However, it should be noted that the following examples are merely illustrative and not intended to limit the scope of the present invention.

The measurements were carried out according to the following methods.

### (1) Measurement of flowability

The oxygen-absorbing composition was poured into a funnel specified in JIS K-6721. When smoothly passed through the funnel, the flowability was rated as good (A). When discontinuously passed through or failed to pass through the funnel, the flowability was rated as poor (B).

### (2) Detection by metal detector

A polyethylene bag packed with 20 g of an oxygen-absorbing composition was tested by a metal detector (available from Anritsu Kogyo Co., Ltd.) which was adjusted so as to detect 0.6 mm *φ* iron particles but not detect 0.5 mm *φ* iron particles. The results were rated as A when not detected, and B when detected.

### (3) Measurement of total oxygen absorption

A laminated packaging material including perforated polyethylene/paper/perforated polyester in this order was made into a bag with the perforated polyethylene inside. Into the bag, 2 g of an oxygen-absorbing composition was packed through the open end, and then, the open end was closed by heat-sealing, to obtain an oxygen-absorbing package. The oxygen-absorbing package, together with an excessive amount (2 L) of wet air, was sealed up in a gas barrier bag made of a polyester/aluminum foil/polyethylene laminate. After allowing to stand at 25°C or 5°C for a period of time sufficient for absorbing oxygen (seven days), the oxygen concentration in the gas barrier bag was analyzed by a gas chromatograph. From the reduction of the oxygen concentration, the oxygen absorption (mL O₂) per apparent volume (1 mL) of the oxygen-absorbing composition was calculated as the total oxygen absorption.

### (4) Measurement of initial oxygen-absorbing speed

In the same manner as above except for allowing to stand for 4 h at 25°C or 5°C, the oxygen absorption for initial four hours per apparent volume (1 mL) of the oxygen-absorbing composition was measured. From the results, an average oxygen absorption for initial one hour was calculated as the initial oxygen-absorbing speed.

### EXAMPLE 1

A mixture of 0.5 kg of a powdery calcium silicate compound (Florite R, trade name of Tokuyama Co., Ltd., hereinafter referred to as "powdery raw material") having an average particle size of 25 µm, 1.8 L of water and 0.08 kg of 50% aqueous solution of poly(vinyl acetate) emulsion as a binder was extruded through a punching plate having circular holes of 1.0 mm diameter, to prepare 2.3 kg of columnar granulates with 1.0 mm minor diameter and 2 to 5 mm length. The powdery calcium silicate compound used here was structured by corollaceous, curved plate crystals made of gyrolite calcium silicate and amorphous silicon dioxide. The obtained granulates were passed through a sizer and then hot-air dried in a fluidized bed drier at 100°C for 30 min until substantially no moisture was noticed, to obtain 0.6 kg of carrier 1.

The powdery raw material was represented by: CaO·mSiO₂·nH₂O wherein m was 2.0 to 2.5 and n was 1.0 to 1.5. The chemical composition thereof was SiO₂: 56 to 63 wt %; CaO: 20 to 27 wt %; Al₂O₃: 0.3 to 0.6 wt %; Na₂O: 0.2 to 0.6 wt %; and Fe₂O₃: less than 0.1 wt %.

Separately, 0.8 kg of iron (II) sulfate hepta hydrate and 1.0 kg of sodium carbonate were dissolved in 10 kg of an 45% aqueous solution of sodium ascorbate to prepare an easily oxidizable composition in the form of aqueous solution.

The easily oxidizable composition was impregnated into a portion of carrier 1 prepared above while adding little by little under stirring to obtain oxygen-absorbing compositions with different addition amounts, which were evaluated for the flowability to determine the largest addition amount (maximum carried amount) of the easily oxidizable composition which allowed to retain a good flowability.

Then, 0.34 kg of the easily oxidizable composition, corresponding to 90% of the maximum carried amount, was impregnated into 0.1 kg of the carrier 1 while adding little by little under stirring to prepare an oxygen-absorbing composition 1.

The oxygen-absorbing composition 1 was measured for the flowability, metal detection, total oxygen absorption, and initial oxygen-absorbing speed in the manners described above. The results are shown in Table 1.

### EXAMPLE 2

A mixture of 0.4 kg of the powdery raw material, 0.1 kg of a powdery activated carbon, 1.7 L of water, and 0.08 kg of a 50% poly(vinyl acetate) emulsion was granulated and dried in the same manner as in Example 1 to prepare 0.6 kg of carrier 2.

Then, in the same manner as in Example 1. 0.28 kg of the easily oxidizable composition, corresponding to 90% of the mixmum carried amount, was impregnated into 0.1 kg of the carrier 2 while adding little by little under stirring to prepare an oxygen-absorbing composition 2.

The oxygen-absorbing composition 2 was measured for the flowability, metal detection, total oxygen absorption, and initial oxygen-absorbing speed in the manners described above. The results are shown in Table 1.

### EXAMPLE 3

A mixture of 0.3 kg of the powdery raw material, 0.2 kg of a powdery activated carbon, 1.7 L of water, and 0.48 kg of a 7% aqueous solution of poly(vinyl alcohol) was granulated and dried in the same manner as in Example 1 to prepare 0.6 kg of carrier 3.

Then, in the same manner as in Example 1, 0.25 kg of the easily oxidizable composition, corresponding to 90% of the maximum carried amount, was impregnated into 0.1 kg of the carrier 3 while adding little by little under stirring to prepare an oxygen-absorbing composition 3.

The oxygen-absorbing composition 3 was measured for the flowability, metal detection, total oxygen absorption, and initial oxygen-absorbing speed in the manners described above. The results are shown in Table 1.

### COMPARATIVE EXAMPLE 1

A mixture of 0.5 kg of a synthesized powdery silicon dioxide (Carplex, trade name of Shionogi & Co., Ltd.; primary particle size: 0.05 µm), 1.8 L of water, and 0.08 kg of a 50% poly(vinyl acetate) emulsion was granulated and dried in the same manner as in Example 1 to prepare 0.6 kg of carrier 4.

Then, in the same manner as in Example 1, 0.20 kg of the easily oxidizable composition, corresponding to 90% of the maximum carried amount, was impregnated into 0.1 kg of the carrier 4 while adding little by little under stirring to prepare an oxygen-absorbing composition 4.

The oxygen-absorbing composition 4 was measured for the flowability, metal detection, total oxygen absorption, and initial oxygen-absorbing speed in the manners described above. The results are shown in Table 1.

### COMPARATIVE EXAMPLE 2

In the same manner as in Example 1, 0.10 kg of the easily oxidizable composition, corresponding to 90% of the maximum carried amount, was impregnated into 0.1 kg of a columnar baked diatomaceous earth (substantially free from water; diameter: 1 mm; length: 2 to 6 mm) while adding little by little under stirring to prepare an oxygen-absorbing composition 5.

The oxygen-absorbing composition 5 was measured for the flowability, metal detection, total oxygen absorption, and initial oxygen-absorbing speed in the manners described above. The results are shown in Table 1.

### COMPARATIVE EXAMPLE 3

In the same manner as in Example 1, it was tried to impregnate 0.1 kg of a powdery wollastonite (naturally-occurring calcium silicate) with the easily oxidizable composition. However, the whole mixture turned into a mass by the addition of a small amount of the easily oxidizable composition, and therefore, a flowable oxygen-absorbing composition could not be prepared.

### COMPARATIVE EXAMPLE 4

In the same manner as in Example 1, 0.19 kg of the easily oxidizable composition, corresponding to 90% of the maximum carried amount, was impregnated into 0.1 kg of a granular activated carbon (particle size: 150 to 1000 µm) while adding little by little under stirring to prepare an oxygen-absorbing composition 6.

The oxygen-absorbing composition 6 was measured for the flowability, metal detection, total oxygen absorption, and initial oxygen-absorbing speed in the manners described above. The results are shown in Table 1.

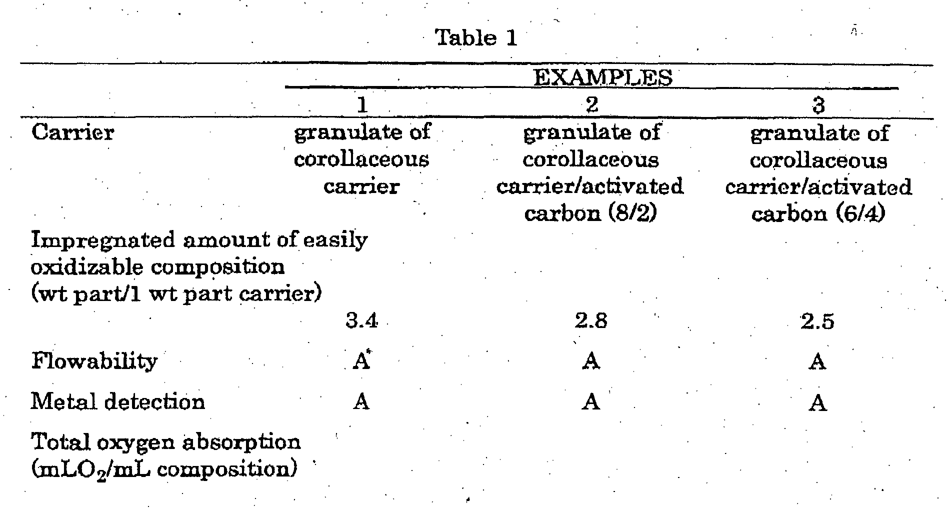

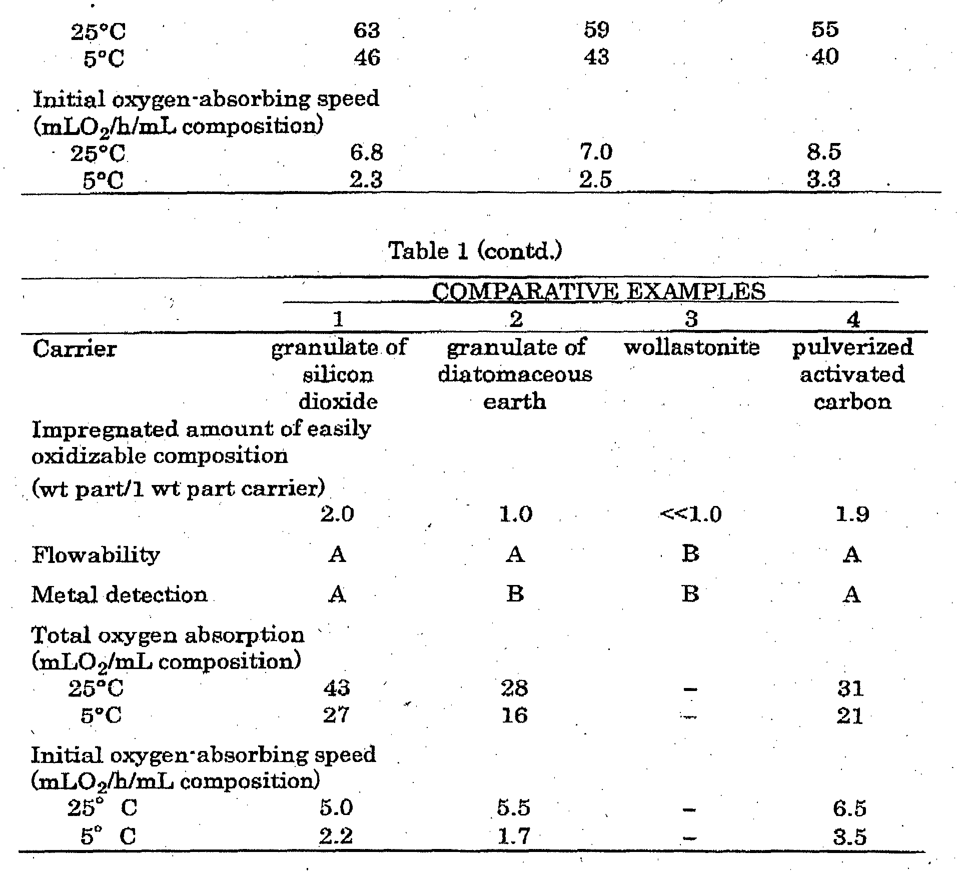

### Industrial Applicability

The carrier used in the invention, as compared with conventional carriers, can be impregnated with a large amount of a liquid easily oxidizable organic composition while retaining a flowability of powder and granulate. Therefore, the oxygen-absorbing ability per unit volume can be enhanced to provide an oxygen-absorbing agent that is small-sized, easy to handle, and produced with low costs of packaging material.

Because of a high Flowability, the oxygen-absorbing composition of the invention is easy to handle and excellent in the ability of packing into a small bags, i.e., excellent in the productivity of the oxygen-absorbing packages. In addition, because of a large total oxygen absorption per unit volume and a large oxygen-absorbing speed, the oxygen-absorbing package can be made compact in its shape. Further, the invention provides an oxygen-absorbing package that is not detected by a metal detector.

## Claims

1. An oxygen-absorbing composition comprising 100 parts by weight of a carrier and 210 parts by weight or more of an easily oxidizable organic composition carried on the carrier by impregnating the dried carrier with the easily oxidizable organic composition in liquid form,
in which the dried carrier is a granulate prepared by granulating a mixture comprising 100 parts by weight of a calcium silicate compound and 0.01 to 20 parts by weight of a binder, and by drying the obtained granulated mixture subsequently;
the calcium silicate compound being represented by the following formula:
CaO • m SiO₂ • n H₂O
wherein m is a number from 2 to 2.5 and n is a number of 1 to 1.5; and
the carrier having crystal structures constituted by the aggregation of curved plate crystals comprising gyrolite calcium silicate and amorphous silicon dioxide.

2. The oxygen-absorbing composition according to Claim 1, wherein the easily oxidizable organic composition is carried on the carrier in an amount exceeding 240 parts by weight based on 100 parts by weight of the carrier.

3. The oxygen-absorbing composition according to Claim 1 or 2, wherein the carrier is a granulate prepared by granulating a mixture comprising 100 parts by weight of the calcium silicate compound, 10 to 150 parts by weight of activated carbon and 0.01 to 20 parts by weight of a binder.

4. The oxygen-absorbing composition according to any one of Claims 1 to 3, wherein the binder is at least one compound selected from the group consisting of poly(vinyl alcohol), poly(vinyl acetate), poly(acrylic acid), polyurethane, methylcellulose, ethylcellulose, carboxymethylcellulose, guar gum, xanthan gum, tragacanth gum, carageenan, and sodium alginate.

5. The oxygen-absorbing composition according to any one of Claims 1 to 4, wherein the easily oxidizable organic composition comprises an easily oxidizable organic compound, an additive for putting the easily oxidizable organic compound in a chemically easily oxidizable condition and/or water.

6. The oxygen-absorbing composition according to Claim 5, wherein the easily oxidizable organic compound is at least one organic compound selected from the group consisting of ascorbic acid, salts of ascorbic acid, erythorbic acid, salts of erythorbic acid, ethylene glycol, propylene glycol, glycerol, glucose, xylose, xylitol, mannitol, sorbitol, catechol, resorcinol, hydroquinone, gallic acid, pyrogallol, tocopherol, vegetable oils, fish oils, tall oil, unsaturated fatty acids derived from vegetable oils, unsaturated fatty acids derived from fish oils, unsaturated fatty acids derived from tall oil, butadiene oligomers, and isoprene oligomers.

7. The oxygen-absorbing composition according to Claim 5 or 6, wherein the additive is at least one compound selected from the group consisting of iron salts, manganese salts, copper salts, cobalt salts, carbonates of either alkali metals or alkaline earth metals, and hydrogen carbonates of either alkali metals or alkaline earth metals.

8. The oxygen-absorbing composition according to any one of Claims 5 to 7, wherein the easily oxidizable organic composition comprises 100 parts by weight of ascorbic acid or its salt, 60 to 200 parts by weight of water, 1 to 35 parts by weight of an alkali agent, and 5 to 30 parts by weight of a transition metal salt catalyst.

9. The oxygen-absorbing composition according to any one of Claims 5 to 7, wherein the easily oxidizable organic composition comprises 100 parts by weight of the polyhydric alcohol, 15 to 115 parts by weight of water, and 3 to 6 parts by weight of the transition metal salt catalyst.

10. An oxygen-absorbing package comprising the oxygen-absorbing composition as defined in any one of Claims 1 to 9 packed by a gas-permeable packaging material.

11. A method for the production of the oxygen-absorbing composition according to any of claims 1 to 9, which comprises granulating the mixture comprising the calcium silicate compound and the binder to prepare a granulated mixture, subsequently drying the obtained granulated mixture to prepare the carrier, and impregnating the carrier with the easily oxidizable organic composition in liquid form.

12. The method according to claim 11, wherein the granulation is carried out by passing the carrier through punching plates or by rolling the carrier in a container.

13. The method according to claim 11, wherein the impregnation is carried out by impregnating the carrier with the easily oxidizable organic composition, in homogeneous liquid form.

## Patentansprüche

1. Sauerstoffabsorbierende Zusammensetzung umfassend 100 Gewichtsteile eines Trägers und 210 Gewichtsteile oder mehr einer leicht oxidierbaren organische Zusammensetzung, die durch Imprägnieren des trockenen Trägers mit einer leicht oxidierbaren organischen Zusammensetzung in flüssiger Form auf den Träger aufgebracht ist,
wobei der trockene Träger ein Granulat ist, das durch Granulierung eines Gemisches, das 100 Gewichtsteile einer Calciumsilicatverbindung und 0,01 bis 20 Gewichtsteile eines Bindemittels umfasst, und durch anschließende Trocknung des erhaltenen granulierten Gemisches hergestellt wird;
wobei die Calciumsilicatverbindung durch die folgende Formel dargestellt ist:
CaO · m SiO₂ · n H₂O
wobei m eine Zahl von 2 bis 2,5 ist und n eine Zahl von1 bis 1,5 ist; und
der Träger Kristallstrukturen aufweist, die durch Aggregation flacher gekrümmter Gyrolit-Calciumsilicat und amorphes Siliciumdioxid umfassender Kristalle aufgebaut ist.

2. Sauerstoffabsorbierende Zusammensetzung nach Anspruch 1, wobei die leicht oxidierbare organische Zusammensetzung auf einen Träger in einer Menge über 240 Gewichtsteile bezogen auf 100 Gewichtsteile des Trägers aufgebracht ist.

3. Sauerstoffabsorbierende Zusammensetzung nach Anspruch 1 oder 2, wobei der Träger ein Granulat ist, das durch Granulierung eines Gemisches hergestellt wird, das 100 Gewichtsteile der Calciumsilicatverbindung, 10 bis 150 Gewichtsteile Aktivkohle und 0,01 bis 20 Gewichtsteile eines Bindemittels umfasst.

4. Sauerstoffabsorbierende Zusammensetzung nach einem der Ansprüche 1 bis 3, wobei das Bindemittel mindestens eine Verbindung ist, die ausgewählt ist aus der Gruppe bestehend aus Poly(vinylalkohol), Poly(vinylacetat), Poly(acrylsäure), Polyurethan, Methylcellulose, Ethylcellulose, Carboxymethylcellulose, Guargummi, Karrageen und Natriumalginat.

5. Sauerstoffabsorbierende Zusammensetzung nach einem der Ansprüche 1 bis 4, wobei die leicht oxidierbare organische Zusammensetzung ein leicht oxidierbares Calciumsilicat, ein Additiv, um die leicht oxidierbare organische Zusammensetzung in einen leicht oxidierbaren Zustand zu versetzen, und/oder Wasser umfasst.

6. Sauerstoffabsorbierende Zusammensetzung nach Anspruch 5, wobei die leicht oxidierbare organische Zusammensetzung mindestens eine organische Verbindung ist, die ausgewählt ist aus der Gruppe bestehend aus Ascorbinsäure, Salzen der Ascorbinsäure, Erythorbinsäure, Erythorbinsäuresalzen, Ethylenglycol, Propylenglycol, Glycerin, Glucose, Xylose, Xylit, Mannit, Sorbit, Catechol, Resorcin, Hydrochinon, Gallussäure, Pyrogallol, Tocopherol, Pflanzenölen, Fischölen, Tallölen, ungesättigen Fettsäuren, die sich von Pflanzenölen ableiten, ungesättigen Fettsäuren, die sich von Fischölen ableiten, ungesättigten Fettsäuren, die sich von Tallöl ableiten, Butadien-Oligomeren und Isopren-Oligomeren.

7. Sauerstoffabsorbierende Zusammensetzung nach Anspruch 5 oder 6, wobei das Additiv mindestens eine Verbindung ist, die ausgewählt ist aus der Gruppe bestehend aus Eisensalzen, Magnesiumsalzen, Kupfersalzen, Kobaltsalzen, Alkalimetallcarbonaten oder Erdalkalimetallcarbonaten, und Alkalimetallhydrogencarbonaten oder Erdalkalimetallhydrogencarbonten.

8. Sauerstoffabsorbierende Zusammensetzung nach einem der Ansprüche 5 bis 7, wobei die leicht oxidierbare organische Zusammensetzung 100 Gewichtsteile an Ascorbinsäure oder ihres Salzes, 60 bis 200 Gewichtsteile Wasser, 1 bis 35 Gewichtsteile einen alkalischen Mittels, und 5 bis 30 Gewichtsteile eines Übergangsmetallkatalysators umfasst.

9. Sauerstoffabsorbierende Zusammensetzung nach einem der Ansprüche 5 bis 7, wobei die leicht oxidierbare organische Zusammensetzung 100 Gewichtsteile mehrwertigen Alkohol, 15 bis 115 Gewichtsteile Wasser und 3 bis 6 Gewichtsteile eines Übergangsmetallkatalysators umfasst.

10. Sauerstoffabsorbierendes Paket umfassend die sauerstoffabsorbierende Zusammensetzung nach einem der Ansprüche 1 bis 9, verpackt mit einem gasdurchlässigen Verpackungsmaterial.

11. Verfahren zur Herstellung der sauerstoffabsorbierenden Zusammensetzung nach einem der Ansprüche 1 bis 9, das das Granulieren des Gemisches, das die Calciumsilicatverbindung und das Bindemittel umfasst, zur Herstellung eines granulierten Gemisches und anschließendes Trocknen des granulierten Gemisches zur Herstellung des Trägers und Imprägnieren des Trägers mit der leicht oxidierbaren organischen Zusammensetzung in flüssiger Form umfasst.

12. Verfahren nach Anspruch 11, wobei die Granulierung durch Hindurchleiten des Trägers durch eine Lochplatte oder durch Walzen des Trägers in einem Behälter umfasst.

13. Verfahren nach Anspruch 11, wobei das Imprägnieren durch Imprägnieren des Trägers mit der leicht oxidierbaren organischen Zusammensetzung in flüssiger homogener Form durchgeführt wird.

## Revendications

1. Composition absorbant l'oxygène comprenant 100 parties en poids d'un porteur et 210 parties en poids ou plus d'une composition organique facilement oxydable portée par le porteur par l'imprégnation du porteur sec avec une composition organique facilement oxydable en forme liquide,
dans laquelle le porteur sec est un granulé préparé par la granulation d'un mélange comprenant 100 parties en poids d'un composé de silicate de calcium et 0,01 à 20 parties en poids d'un liant, et par le séchage suivant ;
le composé de silicate de calcium étant représenté par la formule suivante :
CaO · m SiO₂ · n H₂O
dans laquelle m est un nombre allant de 2 à 2,5 et n est un nombre allant de 1 à 1,5 ; et
le porteur ayant des structures cristallines constituées par l'agrégation des cristaux plats courbes comprenant du silicate de calcium gyrolitique et du dioxyde de silicium amorphe.

2. Composition absorbant l'oxygène selon la revendication 1, dans laquelle la composition organique facilement oxydable est portée sur un porteur dans une quantité surpassant 240 parties en poids basée sur 100 parties en poids du porteur.

3. Composition absorbant l'oxygène selon la revendication 1 ou 2, dans laquelle le porteur est un granulé préparé par la granulation d'un mélange comprenant 100 parties en poids du composé de silicate de calcium, 10 à 150 parties en poids du carbone actif et 0,01 à 20 parties en poids d'un liant.

4. Composition absorbant l'oxygène selon l'une des revendications 1 à 3, dans laquelle le liant est au moins un composé sélectionné parmi le groupe consistant en le poly(vinyle alcool), le poly(vinyle acétate), le poly(acide acrylique), le polyuréthane, la méthyle cellulose, l'éthyle cellulose, la carboxyméthylcellulose, la gomme de guar, le carraghénane et l'alginate de sodium.

5. Composition absorbant l'oxygène selon l'une des revendications 1 à 4, dans laquelle la composition organique facilement oxydable comprend un composé organique facilement oxydable, un additif afin de mettre le composé organique facilement oxydable dans une condition facilement oxydable et/ou de l'eau.

6. Composition absorbant l'oxygène selon la revendication 5, dans laquelle le composé organique facilement oxydable est au moins un composé sélectionné parmi le groupe consistant en l'acide ascorbique, les sels de l'acide ascorbique, de l'acide erythorbique, les sels erythorbique, l'éthylène glycol, le propylène glycol, le glycérol, la glucose, la xylose, le xylitol, le mannitol, le sorbitol, le catéchol, le résorcinol, l'hydroquinone, l'acide gallique, le pyrogallol, le tocophérol, les huiles végétales, les huiles de poisson, l'huile de tall, les acides gras insaturés dérivés des huiles végétales, les acides gras insaturés dérivés des huiles de poisson, les acides gras insaturés dérivés de l'huile de tall, les oligomères de butadiène, et les oligomères d'isoprène.

7. Composition absorbant l'oxygène selon la revendication 5 ou 6, dans laquelle l'additif est au moins un composé sélectionné parmi le groupe consistant en les sels de fer, les sels de manganèse, les sels de cuivre, les sels de cobalt, les carbonates de métaux alcalines ou de métaux alcalino-terreaux, et les carbonates d'hydrogène de métaux alcalines ou de métaux alcalino-terreaux.

8. Composition absorbant l'oxygène selon l'une des revendications 5 à 7, dans laquelle la composition organique facilement oxydable comprend 100 parties en poids de l'acide ascorbique ou de son sel, 60 à 200 parties en poids de l'eau, 1 à 35 parties en poids d'un agent alkali, et 5 à 30 parties en poids d'un catalyseur de sel de métal de transition.

9. Composition absorbant l'oxygène selon l'une des revendications 5 à 7, dans laquelle la composition organique facilement oxydable comprend 100 parties en poids de l'alcool polyhydrique, 15 à 115 parties en poids de l'eau, et 3 à 6 parties en poids d'un catalyseur de sel de métal de transition.

10. Paquet absorbant l'oxygène comprenant la composition absorbant l'oxygène selon l'une des revendications 1 à 9, emballée par un matériau d'emballage perméable au gaz.

11. Procédé pour la production de la composition absorbant l'oxygène selon l'une des revendications 1 à 9, qui comprend la granulation du mélange comprenant le composé de silicate de calcium et le liant afin de préparer un mélange granulé, ensuite le séchage du mélange granulé afin de préparer le porteur, et imprégner le porteur avec la composition organique facilement oxydable en forme liquide.

12. Procédé selon la revendication 11, dans lequel la granulation est mise en oeuvre par le passage du porteur à travers une plaque perforée ou par le roulage du porteur dans un récipient.

13. Procédé selon la revendication 11, dans lequel l'imprégnation est mise en oeuvre par l'imprégnation du porteur avec la composition organique facilement oxydable en forme liquide homogène.
